(19) **Europäisches Patentamt / European Patent Office / Office européen des brevets**

(11) **EP 2 411 832 B1**

(12) **FASCICULE DE BREVET EUROPEEN**

(45) Date de publication et mention
de la délivrance du brevet:
**05.06.2013 Bulletin 2013/23**

(21) Numéro de dépôt: **10709757.8**

(22) Date de dépôt: **24.03.2010**

(51) Int Cl.:
*G01S 19/20* [(2010.01)]     *G01S 19/47* [(2010.01)]

(86) Numéro de dépôt international:
**PCT/EP2010/053807**

(87) Numéro de publication internationale:
**WO 2010/108938 (30.09.2010 Gazette 2010/39)**

(54) **PROCÉDÉ ET DISPOSITIF DE DÉTECTION ET D'EXCLUSION DE PANNES SATELLITE DANS UN SYSTÈME HYBRIDE INS/GNSS**

VERFAHREN UND EINRICHTUNG ZUM DETEKTIEREN UND AUSSCHLIESSEN VON SATELLITENFEHLFUNKTIONEN IN EINEM HYBRIDEN INS/GNSS-SYSTEM

METHOD AND DEVICE FOR DETECTING AND EXCLUDING SATELLITE MALFUNCTIONS IN A HYBRID INS/GNSS SYSTEM

(84) Etats contractants désignés:
**AT BE BG CH CY CZ DE DK EE ES FI FR GB GR HR HU IE IS IT LI LT LU LV MC MK MT NL NO PL PT RO SE SI SK SM TR**

(30) Priorité: **24.03.2009 FR 0951894**

(43) Date de publication de la demande:
**01.02.2012 Bulletin 2012/05**

(73) Titulaire: **Sagem Défense Sécurité
75015 Paris (FR)**

(72) Inventeurs:
• **VOURC'H, Sébastien**
**F-75015 Paris (FR)**
• **MAUGER, Victor**
**F-75015 Paris (FR)**

(74) Mandataire: **Regimbeau
20, rue de Chazelles
75847 Paris Cedex 17 (FR)**

(56) Documents cités:
**EP-A- 1 956 386     US-B1- 7 219 013**

• **DIESEL J ET AL: "GPS/IRS AIME: Calculation of Thresholds and Protection Radius Using Chi-Square Methods" PROCEEDINGS OF THE INSTITUTE OF NAVIGATION (ION) GPS, XX, XX, 1 septembre 1995 (1995-09-01), pages 1959-1964, XP002434515**
• **CLARK B J ET AL: "GPS/INS integration with fault detection and exclusion in shadowed environments" POSITION, LOCATION AND NAVIGATION SYMPOSIUM, 2008 IEEE/ION, IEEE, PISCATAWAY, NJ, USA, 5 mai 2008 (2008-05-05), pages 1-8, XP031340786 ISBN: 978-1-4244-1536-6**
• **PARKINSON B W ET AL: "AUTONOMOUS GPS INTEGRITY MONITORING USING THE PSEUDORANGE RESIDUAL" NAVIGATION, INSTITUTE OF NAVIGATION, FAIRFAX, VA, US, vol. 35, no. 2, 1 juin 1998 (1998-06-01), pages 255-274, XP008064597 ISSN: 0028-1522**

**EP 2 411 832 B1**

**Description**

Le domaine de l'invention est celui des porteurs utilisant des informations fournies à la fois par une centrale inertielle et par un système de navigation par satellite, comme par exemple un système GPS.

L'invention concerne un dispositif et un procédé d'hybridation, et porte plus particulièrement sur la détection et l'exclusion de pannes satellites.

Les porteurs comme les aéronefs ou encore les bateaux disposent de nombreux systèmes de navigation. Parmi ces systèmes, on compte notamment un équipement hybride INS/GNSS (de l'anglo-saxon « Inertial Navigation System » et « Global Navigation Satellite System »).

Une centrale inertielle fournit des informations peu bruitées et précises à court terme. Cependant, sur le long terme, les performances en localisation d'une centrale inertielle se dégradent (plus ou moins vite en fonction de la qualité des capteurs, accéléromètres ou gyroscopes par exemple, et des traitements utilisés par la centrale). Si les informations acquises auprès d'un système de navigation par satellites sont quant à elles très peu susceptibles de dériver sur le long terme, elles sont cependant souvent bruitées et d'une précision variable. Par ailleurs, les mesures inertielles sont toujours disponibles alors que les informations GNSS ne le sont pas ou sont susceptibles d'être leurrées et brouillées.

L'hybridation consiste à combiner les informations fournies par la centrale inertielle et les mesures fournies par le système de navigation par satellites pour obtenir des informations de position et de vitesse en tirant avantage des deux systèmes. Ainsi, la précision des mesures fournies par le récepteur GNSS permet de maîtriser la dérive inertielle et les mesures inertielles peu bruitées permettent de filtrer le bruit sur les mesures du récepteur GNSS.

Les systèmes de navigation modernes calculent des rayons de protection autour de la position calculée qui permettent de contenir l'erreur de position vraie à un risque d'intégrité donné, c'est ce qui définit l'intégrité d'un système.

Selon l'état de l'art, ces rayons de protection peuvent être calculés au moyen d'un banc de filtres de Kalman qui permet de se protéger contre la panne éventuelle d'un satellite.

Ces filtres réalisent l'hybridation entre les informations issues du système de navigation par satellite et celles issues de la centrale inertielle. Un des filtres du banc de filtres, désigné par le terme de filtre principal, utilise toutes les mesures GNSS constituées de pseudo-mesures et d'informations sur la qualité de celles-ci. Les autres filtres, dit secondaires, du banc de filtres ne font usage que d'une partie seulement des mesures GNSS disponibles. Si une panne survient au niveau d'une mesure satellite, celle-ci ne sera pas vue par le filtre secondaire ne recevant pas cette mesure : ce filtre secondaire restera donc non pollué.

L'utilisation d'un tel banc de filtres de Kalman dans le cadre d'une hybridation en boucle fermée (c'est-à-dire lorsque l'on souhaite appliquer directement les corrections calculées par le filtre de Kalman à la plateforme virtuelle) a par exemple été proposée par le document EP1801539 A1.

Ce document prévoit de n'intégrer avantageusement qu'une seule plateforme virtuelle, et de mettre en oeuvre une détection de panne satellite afin de sélectionner le filtre de Kalman dont la sortie sera appliquée à la plateforme virtuelle et aux mesures inertielles qui en sont issues afin de les corriger.

Ainsi, ce document prévoit de sélectionner le filtre de Kalman principal lorsqu'aucune panne d'un des satellites n'est détectée, ou, lorsqu'une panne est détectée, de sélectionner le filtre de Kalman secondaire non affecté par la panne.

Dans la mesure où les corrections proviennent ainsi d'un seul filtre et où ce filtre n'est pas affecté par une panne satellite, on ne vient donc pas appliquer aux mesures inertielles des corrections erronées par propagation d'une information corrompue par une panne satellite.

Toutefois, l'architecture proposée dans ce document ne s'avère pas totalement satisfaisante. En effet, dans la mesure où les corrections sont issues d'un seul filtre, si l'on ne détecte pas une panne, ou si l'on exclut le mauvais satellite, la plate-forme virtuelle va être recalée avec une commande issue d'un filtre pollué par cette panne. Dans la mesure où ce document prévoit en outre que le calcul des pseudo-mesures estimées à priori soit réalisé à partir des informations délivrées par la plate-forme virtuelle, les pseudo-mesures utilisées par tous les filtres sont alors polluées.

Ainsi, lors de l'apparition d'une panne sur une pseudo-mesure et tant que le procédé de détection et d'exclusion de pannes n'a pas identifié le satellite en panne, le filtre qui n'utilise pas la pseudo-mesure où la panne est réellement présente est pollué.

De plus, cette architecture propose de réaliser une recopie sur tous les autres filtres du filtre excluant le satellite identifié comme étant en panne par le procédé de détection et d'exclusion. Cette recopie s'avère problématique dans le cas où le satellite identifié comme étant en panne est en réalité sain car le filtre qui est réellement sain est remplacé par un filtre pollué. Cette méthode peut conduire à une perte d'intégrité dans la mesure où l'erreur de position commise en sortie du système hybride peut ne plus être protégée par le rayon de protection calculé par le système.

L'utilisation d'un banc de filtres de Kalman a également été proposée dans le document US 7,219,013. Selon ce document, les rayons de protection sont calculés à l'aide de la méthode de solution de séparation tandis que la détection et l'exclusion d'une panne satellite mettent en oeuvre une surveillance des résidus d'innovation des filtres de Kalman.

Mais dans cette architecture également, et pour des raisons similaires à celles exposées précédemment en liaison avec le document EP1801539 A1, l'intégrité du filtre qui exclut la panne n'est pas garantie.

Par ailleurs, cette architecture ne permet pas d'isoler des pannes induites par des faibles dérives, de sorte qu'il s'y avère nécessaire de compléter la surveillance des résidus d'innovation par une méthode dite des moindres carrés utilisant uniquement des informations GNSS.

L'invention a pour objectif de pallier à ces inconvénients, et propose à cet effet selon un premier aspect un procédé de surveillance d'intégrité d'informations de position délivrées par un dispositif d'hybridation comprenant un banc de filtres de Kalman élaborant chacun une solution de navigation hybride à partir de mesures inertielles calculées par une plateforme virtuelle et de mesures brutes de signaux émis par une constellation de satellites délivrées par un système de positionnement par satellites GNSS, caractérisé en ce qu'il comporte les étapes consistant, pour chaque satellite de la constellation, à :

- calculer une innovation croisée du satellite reflétant l'écart entre une observation correspondant à une mesure brute issue du satellite et une estimation a posteriori de ladite observation élaborée par un filtre de Kalman n'utilisant pas la mesure brute issue du satellite,
- réaliser un test statistique de l'innovation croisée pour déclarer si le satellite est ou non défaillant.

Certains aspects préférés, mais non limitatifs, de ce procédé sont les suivants :

- le test statistique déclare un satellite comme étant défaillant lorsque son innovation croisé excède un seuil ;
- le seuil correspond à $(H.P_i.H^T + R_i)^*\alpha$, où H représente la matrice d'observation du filtre de Kalman, $P_i$ la matrice d'estimation a posteriori de la covariance de l'erreur, $R_i$ la matrice de covariance du bruit de mesure, et $\alpha$ un coefficient dont la valeur est fixée en fonction d'une probabilité de fausse détection ;
- l'innovation croisée d'un satellite correspond à l'écart entre la pseudo-distance audit satellite délivrée par le système de positionnement par satellites et une estimation a posteriori de cette pseudo-distance fournie par un filtre de Kalman n'utilisant pas la pseudo-distance délivrée par le satellite ;
- le procédé comprend en outre les étapes consistant à :

    - invalider un satellite déclaré comme étant défaillant pour que les mesures brutes dudit satellite défaillant ne soient plus utilisées par les filtres du banc,
    - exclure le satellite invalidé si à l'expiration d'un délai prédéterminé suite à l'invalidation le test statistique de l'innovation croisée conclut toujours à la défaillance dudit satellite et aucun autre test d'innovation croisée n'a déclaré la défaillance d'un autre satellite ;

- en cas de déclaration de défaillance d'un nouveau satellite défaillant au cours du délai prédéterminé, on valide le satellite anciennement invalidé de sorte que ces données brutes soient à nouveau utilisées par les filtres de la banque, et on invalide le nouveau satellite défaillant ;
- en cas de déclaration de défaillance d'un satellite, on réalise une réinitialisation partielle des filtres de la banque utilisant le satellite déclaré comme défaillant en réinitialisant les états liés aux mesures reçues du système de positionnement par satellites et les états liés aux autres senseurs utilisés, et en désensibilisant les états affectés par la panne par ajout de bruit d'état ;
- le procédé met également en oeuvre, pour chaque filtre du banc, un test statistique de l'innovation a priori de chacun des satellites utilisés par le filtre ;
- dans le cas où plusieurs satellites sont déclarés comme étant défaillants suite au test statistique de leur innovation croisée, on invalide le satellite non utilisé par le filtre ayant le plus grand nombre d'innovations a priori dont le test statistique est inférieur à un seuil de sorte que la mesure brute dudit satellite invalidé ne soit plus utilisée par les filtres du banc ; et
- dans le cas où plusieurs satellites sont déclarés comme étant défaillants suite au test statistique de leur innovation croisée et que plusieurs filtres ont le même nombre d'innovations a priori dont le test statistique est inférieur à un seuil, on invalide le satellite dont la valeur absolue du rapport de l'innovation croisée à sa covariance (également appelée innovation croisée normalisée) est la plus grande.

Selon un second aspect, l'invention concerne un dispositif d'hybridation comportant un banc de filtres de Kalman élaborant chacun une solution de navigation hybride à partir de mesures inertielles calculées par une plateforme virtuelle et de mesures brutes de signaux émis par une constellation de satellites délivrées par un système de positionnement par satellites, caractérisé en ce qu'il comporte un module de détection et d'exclusion de pannes satellites configuré de manière à mettre en oeuvre le procédé selon le premier aspect de l'invention.

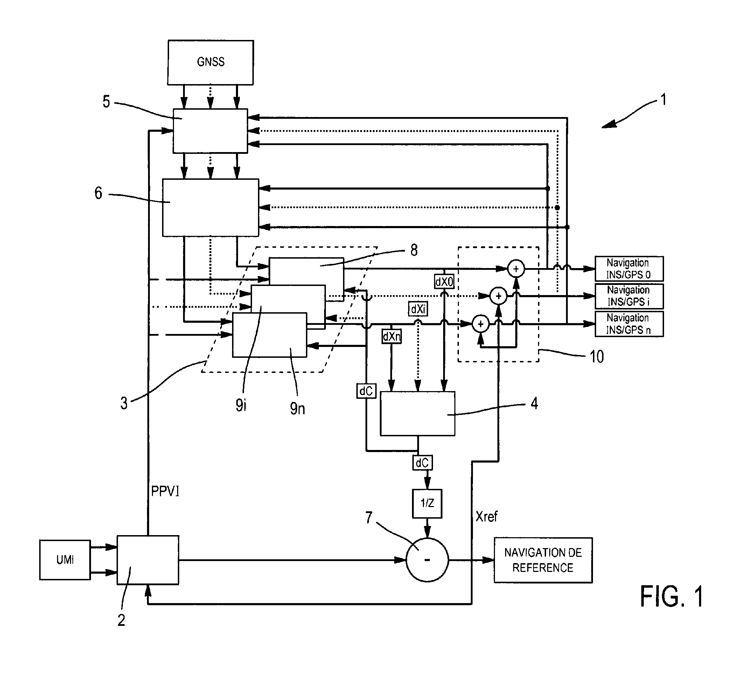

D'autres aspects, buts et avantages de la présente invention apparaîtront mieux à la lecture de la description détaillée suivante de formes de réalisation préférées de celle-ci, donnée à titre d'exemple non limitatif, et faite en référence à la figure 1 annexée, laquelle est un schéma illustrant un mode de réalisation possible d'un dispositif selon le second aspect de l'invention.

En référence à la figure 1, on a représenté un dispositif d'hybridation 1 conforme à un mode de réalisation possible du second aspect de l'invention, destiné à être embarqué au sein d'un porteur tel qu'un aéronef. Le dispositif d'hybridation 1 utilise des informations fournies par une centrale inertielle UMI et par un système de navigation par satellites GNSS, et comprend une seule plateforme virtuelle 2 et un banc 3 de filtres de Kalman.

La plateforme virtuelle 2 reçoit des incréments inertiels provenant des capteurs (gyroscopes, accéléromètres) de la centrale inertielle. Les incréments inertiels correspondent notamment à des incréments angulaires et à des incréments de vitesse. Des informations de navigation inertielle (comme les attitudes, le cap, la vitesse ou la position du porteur) sont calculées par la plateforme virtuelle 2 à partir de ces incréments. Ces informations de navigation inertielle sont désignées mesures inertielles PPVI par la suite.

Ces mesures inertielles PPVI sont transmises à un dispositif de calcul des pseudo-distances estimées a priori (non représenté sur la figure 1) qui reçoit également des données sur la position des satellites. A partir d'une part des mesures inertielles et d'autres par des données sur la position des satellites, le dispositif de calcul des pseudo-distances estimées a priori calcule les pseudo-distances a priori entre le porteur et les différents satellites visibles du porteur.

Le dispositif d'hybridation 1 reçoit également du système de navigation par satellite GNSS les pseudo-mesures entre le porteur et les différents satellites visibles. On calcule alors classiquement les écarts (appelées observations) entre les pseudo-mesures estimées a priori et les pseudo-mesures délivrées par le système GNSS.

Le dispositif d'hybridation 1 comporte en outre un banc de filtres de Kalman 3 réalisant l'hybridation entre les informations inertielles provenant de la centrale inertielle et les informations du système de navigation par satellite. Outre une fonction de fourniture d'informations statistiques sur les mesures en sortie, le rôle des filtres est de maintenir la plateforme virtuelle 2 dans un domaine de fonctionnement linéaire image de celui modélisé dans le filtre de Kalman en estimant chacun un vecteur d'états dX0-dXn (comportant en règle générale de l'ordre de 30 composantes).

De manière classiquement connue en soi, le banc de filtres 3 comporte plusieurs filtres de Kalman en parallèle. Un des filtres est appelé filtre de Kalman principal 8 : il prend en compte toutes les observations (et reçoit pour ce faire toutes les mesures issues du système GNSS) et élabore une solution de navigation hybride principale.

Les autres filtres 9i, 9n sont appelées filtres secondaires : ils ne prennent en compte qu'une partie des observations, par exemple (n-1) observations parmi les n observations relatives aux n satellites visibles de sorte que le i-ème filtre de Kalman secondaire 9i reçoit du système GNSS les mesures de tous les satellites sauf du i-ème, et élaborent chacun une solution de navigation hybride secondaire.

On relèvera que le processus d'élaboration des observations décrit ci-dessus n'est pas commun à tous les filtres de la banque 3, mais est réalisé pour chacun des filtres. Ainsi, le calcul des pseudo-distances a priori et le calcul des observations qui sont évoqués ci-dessus ne sont pas communs à tous les filtres de la banque, mais le dispositif d'hybridation 1 conforme à l'invention réalise ces calculs pour chaque filtre de la banque.

Le dispositif d'hybridation 1 élabore une sortie hybride Xref (« Navigation de référence ») correspondant aux mesures inertielles PPVI calculées par la plateforme virtuelle 2 et corrigées, via un soustracteur 7, par un vecteur de stabilisation dC présentant autant de composantes que les vecteurs d'états estimés par les filtres de Kalman.

Afin d'élaborer les solutions de navigation hybride, le dispositif 1 comporte un banc de sommateurs 10, où chaque sommateur est positionné en sortie d'un filtre de la banque pour ajouter au vecteur d'état dX0-dXn élaboré par le filtre la sortie hybride Xref.

Dans le cadre d'un dispositif d'hybridation en boucle fermée, la sortie hybride Xref est rebouclée à l'entrée de la plateforme virtuelle 2.

Par ailleurs, comme cela est représenté sur la figure 1, le vecteur de stabilisation dC peut être appliqué à l'entrée de l'ensemble des filtres de la banque de filtres. De telle manière, les filtres de Kalman s'ajustent en soustrayant à leur estimation (vecteur d'états dX) la correction dC, et sont ainsi maintenus cohérents de la plateforme virtuelle.

Le dispositif d'hybridation comporte en outre un module 4 d'élaboration du vecteur de stabilisation dC dont deux modes de réalisation sont indiqués ci-après à titre d'exemples non limitatifs.

Selon un premier mode de réalisation possible, les corrections à appliquer aux mesures inertielles sont issues d'un seul filtre. Ainsi, le vecteur de stabilisation dC est égal, dans toutes ses composantes, au vecteur d'états estimé par le filtre de Kalman sélectionné. La sélection s'opère par exemple au sein du module 4 conformément au document EP1801539 A par détection d'une éventuelle panne satellite.

Selon un second mode de réalisation possible, le vecteur de stabilisation dC est élaboré composante par composante, en utilisant pour chaque composante l'ensemble des filtres de Kalman. Le module 4 d'élaboration de la correction dC est alors configuré pour élaborer chacune des composantes dC[état] du vecteur de stabilisation dC en fonction de l'ensemble des composantes correspondantes dX0[état]-dXn[état] des vecteurs de correction dX0-dXn. L'élaboration de chacune des composantes s'opère par exemple conformément à la demande de brevet FR0858721 déposée le 17 Décembre 2008 par la Demanderesse.

Selon une variante de réalisation de l'invention représentée sur la figure 1, on associe à chaque filtre du banc un module de correction des mesures satellites 5 délivrant au filtre les mesures (typiquement les pseudo-mesures) du système de positionnement par satellites GNSS qui sont utilisées par le filtre après correction à l'aide de la solution de navigation hybride élaborée par le filtre. Ce module de correction 5 fait l'objet de la demande de brevet FR 0858726 déposée le 17 Décembre 2008 par la Demanderesse.

Dans ce qui suit, on définit un satellite en panne comme étant un satellite qui envoie des informations erronées dans son message, conduisant à un écart (fixe ou variable) entre sa position réelle et la position donnée dans son message.

Le dispositif d'hybridation selon l'invention comporte un module 6 de détection et d'exclusion de pannes satellites configuré de manière à mettre en oeuvre, pour chaque satellite de la constellation, les étapes consistant à :

- calculer une innovation croisée du satellite reflétant l'écart entre une observation correspondant à une mesure brute issue du satellite et une estimation a posteriori de ladite observation élaborée par un filtre de Kalman n'utilisant pas la mesure brute issue du satellite, de sorte que cette estimation est indépendante du satellite que l'on souhaite tester,
- réaliser un test statistique de l'innovation croisée pour déclarer si le satellite est ou non défaillant.

Comme cela sera détaillé par la suite, le module 6 de détection et d'exclusion de pannes satellites met également en oeuvre une fonction de gestion et d'exclusion des mesures GNSS pour surveiller les innovations en cas de détection d'un satellite défaillant. Dans le mode de réalisation représenté sur la figure 1, le module 6 reçoit ainsi les mesures GNSS après éventuelle correction par le module 5 et route ces informations vers les différents filtres du banc en fonction des circonstances (aucun satellite détecté comme étant défaillant ; invalidation d'un satellite détecté comme étant défaillant ; exclusion d'un satellite détecté comme étant défaillant).

L'invention propose ainsi de réaliser une détection et exclusion de pannes satellites basée sur les tests d'innovations croisées des satellites non utilisés et les tests d'innovations des satellites utilisés au moment de l'hybridation par chaque filtre de la banque de filtre.

Dans le cadre de l'invention, chaque filtre n'utilisant pas un satellite teste l'innovation de ce satellite (appelée innovation croisée) à partir de la position fournie par ce filtre. On peut ainsi détecter une panne satellite par le filtre n'utilisant pas le satellite en panne. L'avantage par rapport aux tests d'innovation classiques est que le filtre qui permet de tester un satellite en panne n'est pas perturbé par la panne.

En effet, le i-ème filtre de Kalman secondaire 9i reçoit du système GNSS (via le cas échéant le module de correction 5) les mesures de tous les satellites sauf du i-ème, et élabore ainsi le vecteur d'états dXi de manière indépendante du satellite i, de sorte que ce filtre 9i n'est pas perturbé par une éventuelle panne affectant le satellite i.

L'innovation croisée d'un satellite correspond par exemple à l'écart entre la pseudo-distance audit satellite $PR_i$ délivrée par le système de positionnement par satellites et une estimation a posteriori $\hat{PR}_i$ de cette pseudo-distance fournie par un filtre de Kalman n'utilisant pas la pseudo-distance délivrée par le satellite, de sorte que cette estimation $\hat{PR}_i$ est indépendant du satellite que l'on souhaite tester. Le résultat du test ne sera donc pas perturbé par une panne, et notamment par une panne lente, du satellite.

On précise ici que l'innovation croisée peut d'une manière générale être appliquée à n'importe quelle mesure brute, par exemple à une mesure de pseudo-vitesse (également appelée mesure doppler).

Revenant à l'exemple d'une innovation croisée appliquée à une pseudo-distance, on note $Inno_i$ l'innovation croisée du satellite d'indice i :

$$Inno_i = PR_i - \hat{PR}_i = H(X_i) - H(\hat{X}_i),$$

où

- H correspond au modèle d'observation du filtre de Kalman,
- $X_i$ correspond à la position réelle, non connue, du porteur
- $\hat{X}_i$ correspond à la position du porteur telle qu'estimée par le i-ème filtre de Kalman secondaire 9i, soit $\hat{X}_i = dXi + Xref$.

En linéarisant l'équation précédente par développement de la matrice d'observation H au premier ordre : $Inno_i = \dot{H}(\hat{X}_i).(X_i - \hat{X}_i)$, où $\dot{H}$ désigne la dérivée au premier ordre de H.

La statistique de l'erreur $(X_i - \hat{X}_i)$ sur la position étant connue de par le filtre de Kalman (elle est notée Pi ci-après), le test statistique consiste par exemple à confronter l'innovation croisée à un seuil dépendant de sa covariance et pris égal à $(H.P_i.H^T + R_i)*\alpha$, où H représente la matrice d'observation du filtre de Kalman, Pi la matrice d'estimation a posteriori de la covariance de l'erreur, Ri la matrice de covariance du bruit de mesure, et $\alpha$ un coefficient dont la valeur est fixée en fonction de la probabilité de fausse détection.

Un satellite est alors déclaré comme étant défaillant lorsque son innovation croisée excède le seuil présenté ci-dessus.

Afin de réaliser la fonction d'exclusion, le module 6 est en outre configuré pour :

- invalider un satellite déclaré comme étant défaillant pour que les mesures brutes dudit satellite défaillant ne soient plus utilisées par les filtres de la banque,
- exclure le satellite invalidé si à l'expiration d'un délai prédéterminé TE suite à l'invalidation le test statistique de l'innovation croisée dudit satellite conclut toujours à la défaillance dudit satellite, et qu'aucun autre test d'innovation croisée n'a signalé la défaillance d'un autre satellite.

Ainsi, lorsque qu'un satellite est détecté comme étant en panne, on continue à surveiller ce.satellite pendant un temps TE. Ce satellite, d'indice i par exemple, ne sera plus utilisé par tous les filtres mais continuera à être testé par le filtre 9i qui ne l'hybride pas via le test d'innovation croisée (le fait d'invalider le satellite suspect ne modifie effectivement en rien le fonctionnement du filtre 9i n'utilisant pas ce satellite). L'avantage d'invalider le satellite suspect pendant le procédé d'exclusion est que s'il n'y a pas d'ambigüité sur le choix du satellite à exclure, il sera de fait exclu dès le début de TE (au moment de la détection). Ainsi, la valeur de la durée TE n'influe pas dans la majorité des cas sur les performances du dispositif d'hybridation.

Selon un mode de réalisation possible, en cas de déclaration de défaillance d'un nouveau satellite au cours du délai TE, on valide le satellite anciennement invalidé de sorte que ces données brutes soient à nouveau utilisées par les filtres de la banque, et on invalide le nouveau satellite défaillant. On réalise ainsi un changement de satellite suspect lorsque malgré l'invalidation du premier satellite, une autre innovation croisée dépasse le seuil (ce qui n'est pas censé arriver dans l'hypothèse où le premier satellite était réellement celui en panne).

Selon un autre mode de réalisation possible, on réalise également, pour chaque filtre de la banque, un test statistique de l'innovation a priori de chacun des satellites utilisés par le filtre. Il s'agit par exemple de réaliser un test gaussien des innovations (contraint par une probabilité $\beta$) pour les satellites utilisés par chaque filtre.

Ces tests d'innovations dits classiques peuvent aider à choisir le filtre n'utilisant pas le satellite défaillant lorsque plusieurs innovations croisées dépassent un seuil. En effet, il peut arriver qu'une défaillance d'un satellite perturbe suffisamment la position d'un ou plusieurs filtres l'utilisant pour que leurs innovations croisées dépassent également ce seuil. Il faut alors invalider le bon satellite parmi plusieurs possibles. Dans ce mode de réalisation, le choix du satellite à invalider est facilité par la prise en compte des tests d'innovations classiques qui permettent d'évaluer la pertinence de chacun des filtres. Le filtre le plus fiable sera celui qui a le plus grand nombre d'innovations classiques inférieures au seuil.

Ainsi, dans le cas où plusieurs satellites sont déclarés comme étant défaillants suite au test statistique de leur innovation croisée, on invalide le satellite non utilisé par le filtre ayant le plus grand nombre d'innovations a priori dont le test statistique est inférieur à un seuil de sorte que la mesure brute dudit satellite invalidé ne soit plus utilisée par les filtres du banc.

Il peut également arriver que plusieurs satellites soient déclarés comme étant défaillants suite au test statistique de leur innovation croisée et qu'il existe plusieurs filtres n'utilisant pas ces satellites ayant le même plus grand nombre d'innovations à priori dont le test statistique est inférieur à un seuil. Dans ce cas, le choix du satellite défaillant à invalider est alors fait en considérant le satellite donnant l'innovation croisée normalisée la plus grande en valeur absolue.

Selon un autre aspect de l'invention, en cas de déclaration de défaillance d'un satellite, on peut réaliser une réinitialisation partielle des filtres du banc utilisant le satellite exclu, notamment en réinitialisant les états liés aux mesures reçues du système GNSS et les états liés aux autres senseurs utilisés (tels que le baromètre), et en désensibilisant les états affectés par la panne par ajout de bruit d'état, ceci afin de faire reconverger les filtres concernés vers une solution saine si le satellite détecté comme étant défaillant est effectivement le satellite en panne.

On notera que ce type de réinitialisation peut être réalisé lors de la déclaration de défaillance d'un satellite, ou lors d'un changement d'identification du satellite défaillant durant la durée TE.

Les avantages du procédé et dispositif selon l'invention sont notamment les suivants:

- le filtre de la banque qui n'utilise pas le satellite malade n'est plus affecté par la panne ;
- les filtres de la banque sont totalement ségrégués ;
- l'intégrité est toujours garantie sans moyen de détection et d'exclusion de panne interne ou externe ;
- l'intégrité n'est plus contrainte par un moyen de détection et d'exclusion de panne ;
- la charge de calcul du procédé de détection et d'exclusion de pannes satellites est faible ;
- les exigences de continuité contraignent uniquement l'algorithme de détection et d'exclusion ;
- la détection des pannes lentes est réalisée avec les mêmes performances que les pannes rapides (mêmes valeurs moyennes des biais détectés).

**Revendications**

1. Procédé de surveillance d'intégrité d'informations de position délivrées par un dispositif d'hybridation comprenant un banc (3) de filtres de Kalman élaborant chacun une solution de navigation hybride à partir de mesures inertielles calculées par une plateforme virtuelle (2) et de mesures brutes de signaux émis par une constellation de satellites délivrées par un système de positionnement par satellites (GNSS), **caractérisé en ce qu'**il comporte les étapes consistant, pour chaque satellite de la constellation, à :

   - calculer une innovation croisée du satellite reflétant l'écart entre une observation correspondant à une mesure brute issue du satellite et une estimation a posteriori de ladite observation élaborée par un filtre de Kalman n'utilisant pas la mesure brute issue du satellite,

- réaliser un test statistique de l'innovation croisée pour déclarer si le satellite est ou non défaillant.

**2.** Procédé selon la revendication 1, dans lequel le test statistique déclare un satellite comme étant défaillant lorsque son innovation croisée excède un seuil.

**3.** Procédé la revendication précédente, dans lequel le seuil correspond à $(H.P_i.H^T + R_i)^*\alpha$, où H représente la matrice d'observation du filtre de Kalman, $P_i$ la matrice d'estimation a posteriori de la covariance de l'erreur, $R_i$ la matrice de covariance du bruit de mesure, et $\alpha$ un coefficient dont la valeur est fixée en fonction d'une probabilité de fausse détection.

**4.** Procédé selon l'une des revendications précédentes, dans lequel l'innovation croisée d'un satellite correspond à l'écart entre la pseudo-distance audit satellite délivrée par le système de positionnement par satellites et une estimation a posteriori de cette pseudo-distance fournie par un filtre de Kalman n'utilisant pas la pseudo-distance délivrée par le satellite.

**5.** Procédé selon l'une des revendications précédentes, comprenant en outre les étapes consistant à :

- invalider un satellite déclaré comme étant défaillant pour que les mesures brutes dudit satellite défaillant ne soient plus utilisées par les filtres du banc,
- exclure le satellite invalidé si à l'expiration d'un délai prédéterminé suite à l'invalidation le test statistique de l'innovation croisée conclut toujours à la défaillance dudit satellite et aucun autre test d'innovation croisée n'a déclaré la défaillance d'un autre satellite.

**6.** Procédé selon la revendication précédente, dans lequel, en cas de déclaration de défaillance d'un nouveau satellite défaillant au cours du délai prédéterminé, on valide le satellite anciennement invalidé de sorte que ces données brutes soient à nouveau utilisées par les filtres de la banque, et on invalide le nouveau satellite défaillant.

**7.** Procédé selon l'une des deux revendications précédentes, dans lequel en cas de déclaration de défaillance d'un satellite, on réalise une réinitialisation partielle des filtres de la banque utilisant le satellite déclaré comme défaillant en réinitialisant les états liés aux mesures reçues du système de positionnement par satellites et les états liés aux autres senseurs utilisés, et en désensibilisant les états affectés par la panne par ajout de bruit d'état.

**8.** Procédé selon l'une des revendications précédentes, mettant également en oeuvre, pour chaque filtre du banc, un test statistique de l'innovation a priori de chacun des satellites utilisés par le filtre.

**9.** Procédé selon la revendication précédente, dans lequel dans le cas où plusieurs satellites sont déclarés comme étant défaillants suite au test statistique de leur innovation croisée, on invalide le satellite non utilisé par le filtre ayant le plus grand nombre d'innovations a priori dont le test statistique est inférieur à un seuil de sorte que la mesure brute dudit satellite invalidé ne soit plus utilisée par les filtres du banc.

**10.** Procédé selon la revendication précédente, dans lequel dans le cas où plusieurs satellites sont déclarés comme étant défaillants suite au test statistique de leur innovation croisée et où les filtre n'utilisant pas ces satellites ont le même nombre d'innovations à priori dont le test statistique est inférieur à un seuil, on invalide le satellite dont la valeur absolue du rapport de l'innovation croisée à sa covariance est la plus grande de sorte que la mesure brute dudit satellite invalidé ne soit plus utilisée par les filtres du banc.

**11.** Dispositif d'hybridation (1) comportant un banc (3) de filtres de Kalman élaborant chacun une solution de navigation hybride à partir de mesures inertielles calculées par une plateforme virtuelle (2) et de mesures brutes de signaux émis par une constellation de satellites délivrées par un système de positionnement par satellites (GNSS), **caractérisé en ce qu'**il comporte un module de détection et d'exclusion de pannes satellites configuré de manière à mettre en oeuvre le procédé selon l'une quelconque des revendications précédentes.

**Patentansprüche**

**1.** Verfahren zur Überwachung der Integrität von Positionsangaben, die von einer Hybridisierungsvorrichtung geliefert werden, die eine Bank (3) von Kalman-Filtern umfasst, die jeweils anhand von Trägheitsmesswerten, die durch eine virtuelle Plattform (2) errechnet werden, und anhand von Rohmesswerten von durch eine Satellitenkonstellation abgegebenen Signalen, die von einem Positionierungssatellitensystem (GNSS) geliefert werden, eine Hybridnavigationslösung erstellen

**dadurch gekennzeichnet, dass** es für jeden Satelliten der Konstellation die folgenden Schritte umfasst:

- Berechnen einer Kreuz-Innovation des Satelliten, die die Abweichung zwischen einer Beobachtung, die einer von dem Satelliten stammenden Rohmessung entspricht, und einen a posteriori Schätzwert der Beobachtung widerspiegelt, der durch ein Kalman-Filter erstellt wird, das die von dem Satelliten stammende Rohmessung nicht verwendet,
- Durchführen eines statistischen Tests der Kreuz-Innovation, um anzuzeigen, ob der Satellit ausgefallen ist oder nicht.

2. Verfahren nach Anspruch 1,
bei dem der statistische Test einen Satelliten als ausgefallen anzeigt, wenn seine Kreuz-Innovation einen Schwellenwert übersteigt.

3. Verfahren nach dem vorhergehenden Anspruch,
bei dem der Schwellenwert gleich $(H.P_i.H^T+R_i)*\alpha$ ist, wobei H für die Beobachtungsmatrix des Kalman-Filters, $P_i$ für die a posteriori Schätzmatrix der Kovarianz des Fehlers, $R_i$ für die Kovarianzmatrix des Messrauschens und $\alpha$ für einen Koeffizienten steht, dessen Wert in Abhängigkeit von der Wahrscheinlichkeit einer falschen Abfrage festgelegt ist.

4. Verfahren nach einem der vorhergehenden Ansprüche,
bei dem die Kreuz-Innovation eines Satelliten der Abweichung zwischen der durch das Positionierungssatellitensystem gelieferten Pseudostrecke zu dem Satelliten und einem a posteriori Schätzwert dieser Pseudostrecke entspricht, der durch ein Kalman-Filter geliefert wird, das die durch den Satelliten gelieferte Pseudostrecke nicht verwendet.

5. Verfahren nach einem der vorhergehenden Ansprüche, das ferner die folgenden Schritte umfasst:

- Annullieren eines als ausgefallen angezeigten Satelliten, damit die Rohmesswerte des ausgefallenen Satelliten von den Filtern der Filterbank nicht mehr verwendet werden,
- Ausschließen des annullierten Satelliten, wenn nach Ablauf einer vorbestimmten Frist nach der Annullierung der statistische Test der Kreuz-Innovation immer noch auf den Ausfall des Satelliten hindeutet und kein anderer Test der Kreuz-Innovation den Ausfall eines anderen Satelliten angezeigt hat.

6. Verfahren nach dem vorhergehenden Anspruch,
bei dem im Falle des Anzeigens des Ausfalls eines neuen ausgefallenen Satelliten innerhalb der vorbestimmten Frist der früher annullierte Satellit als gültig bestätigt wird, so dass die Rohdaten erneut von den Filtern der Filterbank verwendet werden, und der neue ausgefallene Satellit annulliert wird.

7. Verfahren nach einem der beiden vorhergehenden Ansprüche,
bei dem im Falle des Anzeigens des Ausfalls eines Satelliten ein teilweises Rücksetzen der Filter der Filterbank erfolgt, die den als ausgefallen angezeigten Satelliten verwenden, wobei die Zustände, die mit den von dem Positionierungssatellitensystem empfangenen Messwerten in Verbindung stehen, und die Zustände, die mit den anderen verwendeten Sensoren in Verbindung stehen, zurückgesetzt werden und wobei die durch den Ausfall betroffenen Zustände durch Hinzufügen von Zustandsrauschen desensibilisiert werden.

8. Verfahren nach einem der vorhergehenden Ansprüche,
wobei für jeden Filter der Filterbank auch ein statistischer Test der a priori Innovation eines jeden durch den Filter verwendeten Satelliten durchgeführt wird.

9. Verfahren nach dem vorhergehenden Anspruch,
bei dem für den Fall, dass mehrere Satelliten infolge des statistischen Tests ihrer Kreuz-Innovation als ausgefallen angezeigt werden, der von dem Filter nicht verwendete Satellit mit der größten Anzahl an a priori Innovationen annulliert wird, deren statistischer Test unter einem Schwellenwert liegt, so dass der Rohmesswert des annullierten Satelliten von den Filtern der Filterbank nicht mehr verwendet wird.

10. Verfahren nach dem vorhergehenden Anspruch,
bei dem für den Fall, dass mehrere Satelliten infolge des statistischen Tests ihrer Kreuz-Innovation als ausgefallen angezeigt werden und dass die diese Satelliten nicht verwendenden Filter die gleiche Anzahl an a priori Innovationen haben, deren statistischer Test unter einem Schwellenwert liegt, der Satellit annulliert wird, dessen Absolutwert des Verhältnisses der Kreuz-Innovation zu seiner Kovarianz der größte ist, so dass der Rohmesswert des annullierten Satelliten von den Filtern der Filterbank nicht mehr verwendet wird.

11. Hybridisierungsvorrichtung (1) mit einer Bank (3) von Kalman-Filtern, die jeweils anhand von Trägheitsmesswerten, die durch eine virtuelle Plattform (2) errechnet werden, und anhand von Rohmesswerten von durch eine Satellitenkonstellation abgegebenen Signalen, die von einem Positionierungssatellitensystem (GNSS) geliefert werden, eine Hybridnavigationslösung erstellen,
**dadurch gekennzeichnet, dass** sie ein Modul zur Detektion und zum Ausschluss von Satellitenausfällen umfasst, das solchermaßen konfiguriert ist, dass das Verfahren nach einem der vorhergehenden Ansprüche durchgeführt wird.

## Claims

1. A process for monitoring the integrity of position information delivered by a data fusion device comprising a bank (3) of Kalman filters each generating a hybrid navigation solution based on inertial measurements calculated by a virtual platform (2) and raw measurements of signals emitted by a constellation of satellites delivered by a satellite positioning system (GNSS), **characterized in that** it comprises the steps consisting, for each satellite in the constellation, of:

   - calculating a cross-innovation of the satellite reflecting the disparity between an observation corresponding to a raw measurement issuing from the satellite and an a posteriori estimate of said observation generated by a Kalman filter not using the raw measurement issuing from the satellite,
   - carrying out a statistical test of the cross-innovation to declare whether or not the satellite is faulty.

2. A process according to Claim 1, wherein the statistical test declares a satellite to be faulty when its cross-innovation exceeds a threshold.

3. A process according to the foregoing claim, wherein the threshold corresponds to $(H.P_i.H^T + R_i)^*\alpha$, where H represents the observation matrix of the Kalman filter, $P_i$ the a posteriori estimation matrix of the covariance of the error, $R_i$ the covariance matrix of the measurement noise, and $\alpha$ a coefficient the value whereof is set according to the probability of a false detection.

4. A process according to one of the foregoing claims, wherein the cross-innovation of a satellite corresponds to the disparity between the pseudo-distance to said satellite delivered by the satellite positioning system and an a posteriori estimate of that pseudo-distance supplied by a Kalman filter not using the pseudo-distance delivered by the satellite.

5. A process according to one of the foregoing claims, also comprising the steps consisting of:

   - invalidating a satellite declared to be faulty so that the raw measurements from said faulty satellite are no longer used by the filters in the bank,
   - rejecting the invalidated satellite if, on expiration of a predetermined period following invalidation, the statistical test of the cross-innovation still concludes that said satellite is faulty and no other cross-innovation test has declared the failure of another satellite.

6. A process according to the foregoing claim wherein, in the event of declaration of failure of another satellite during the predetermined period, the formerly invalidated satellite is validated so that these raw data are again used by the filters in the bank, and the new faulty satellite is invalidated.

7. A process according to one of the foregoing two claims, wherein in the event of a declaration of failure of a satellite, a partial reinitialization of the filters of the bank is performed using the satellite declared to be faulty by reinitializing the states connected with the measurements received from the satellite positioning system and the states connected with the other sensors used, and by desensitizing the states affected by the breakdown by adding state noise.

8. A process according to one of the foregoing claims also implementing, for each filter in the bank, a statistical test of the a priori innovation of each of the satellites used by the filter.

9. A process according to the foregoing claim wherein, in the case where several satellites are declared to be faulty as a result of the statistical test of their cross-innovation, the satellite not used by the filter having the greatest number of a priori innovations the statistical test whereof is below a threshold is invalidated, so that the raw measurement of said invalidated satellite is no longer used by the filters in the bank.

10. A process according to the foregoing claim wherein, in the case where several satellites are declared to be faulty as a result of the statistical test of their cross-innovation and where the filters not using these satellites have the same number of a priori innovations the statistical test whereof is below a threshold, the satellite having the greatest absolute value of the ratio of the cross-innovation to its covariance is invalidated so that the raw measurement of said invalid satellite is no longer used by the filters in the bank.

11. A data fusion device (1) comprising a bank (3) of Kalman filters each generating a hybrid navigation solution based on inertial measurements calculated by a virtual platform (2) and on raw measurements of signals emitted by a constellation of satellites delivered by a satellite positioning system (GNSS), **characterized in that** it comprises a satellite failure detection and rejection module configured so as to implement the process according to any one of the foregoing claims.

FIG. 1

EP 2 411 832 B1

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 1801539 A1
- US 7219013 B
- EP 1801539 A

- FR 0858721
- FR 0858726